# EUROPÄISCHE PATENTSCHRIFT

(11) **EP 1 204 769 B1**
(45) Veröffentlichungstag und Bekanntmachung des Hinweises auf die Patenterteilung: **06.08.2003**
(21) Anmeldenummer: 00927175.0
(22) Anmeldetag: 10.05.2000
(51) Int. Cl.: C21C 5/52, F23D 14/60, F23D 14/22, F23D 14/32

(54) **VORRICHTUNG UND VERFAHREN ZUR EINDÜSUNG VON ERDGAS UND/ODER SAUERSTOFF**
DEVICE AND METHOD FOR SPRAYING NATURAL GAS AND/OR OXYGEN
DISPOSITIF ET PROCEDE POUR LA PULVERISATION DE GAZ NATUREL ET/OU D'OXYGENE

(30) Priorität: 15.05.1999 DE 19922509
(43) Veröffentlichungstag der Anmeldung: 15.05.2002
(73) Patentinhaber: Messer Griesheim GmbH, 65933 Frankfurt am Main (DE)
(72) Erfinder: FRANKE, Heinz, D-47829 Krefeld (DE); GRETER, Heinz, D-47839 Krefeld (DE)
(86) Internationale Anmeldenummer: EP0004158
(87) Internationale Veröffentlichungsnummer: WO00070102

(56) Entgegenhaltungen:
- EP-A- 0 158 045
- WO-A-97/17475
- DE-A- 19 820 589
- DE-A- 19 932 178
- US-A- 4 793 798
- US-A- 5 503 548

## Beschreibung

Die Erfindung betrifft eine Vorrichtung und ein Verfahren zur Eindüsung von Brennstoff und/oder Sauerstoff in einen metallurgischen Schmelzofen.

Weltweit geht in den letzten Jahren der Trend dahin, für die Stahlerzeugung verstärkt den Lichtbogenofen zu nutzen. Die Leistungsfähigkeit und damit die Produktivität sowie die Wirtschaftlichkeit der Lichtbogenöfen wurde zunehmend gesteigert.

Die Entwicklung des Schmelzprozesses in Lichtbogenöfen wurde beeinflußt durch den Einsatz von Brennstoff/Sauerstoff-Brennern. Neben dem Einsatz dieser Brenner ist die Entwicklung des Schmelzprozesses von den Faktoren Sauerstoffverbrauch, dem zunehmenden Einsatz von fossilen Brennstoffen als Kohlenstoffträger, der Nutzung von verunreinigten Schrotten und einem stärkeren Umweltbewußtsein beeinflußt worden.

Um den spezifischen Elektroenergieverbrauch im Lichtbogenofen senken zu können, müssen vorrangig die Abgasverluste, auf die bis zu 30 % der eingebrachten Energie entfallen, reduziert werden. Das Abgas der Lichtbogenöfen enthält einen bedeutenden Betrag an chemischer und thermischer Energie von unvollkommen verbrannten Komponenten wie Kohlenmonoxid (CO); Wasserstoff (H₂) und andere Radikalen (Cₘ Hₙ). Die unverbrannten Komponenten entstehen in der Startphase des Einschmelzens, wenn Öl, Fett und andere in Schrott enthaltene Materialien sowie fossile Brennstoffe verbrennen. In den meisten Fällen ist nicht genügend Sauerstoff im Inneren des Lichtbogenofens verfügbar, so dass z.B. Kohlenstoff nur zu CO oxidiert wird.

Die vollständige Verbrennung der einzelnen Komponenten im Lichtbogenofen wird beim Einschmelzen von Schrott erschwert, da infolge des Schrotthaufwerkes, das sich nach dem Chargieren im Lichtbogenofen befindet, z.T. nur kleine Verbrennungsräume zur Verfügung stehen und sich die feuerungstechnischen Randbedingungen ständig ändern.

Der Verbrennungsablauf wird dabei im wesentlichen durch die Mischung zwischen brennbaren Komponenten und dem Oxidationsmedium bestimmt. Hieraus ergibt sich die Forderung, eine wirksame, d.h. intensive Gemischbildung zu schaffen, um einen optimalen Ausbrand zu erreichen.

Aus der DE 36 290 55 C2 ist es bekannt, mehrere Aufblasvorrichtungen für Sauerstoff im oberen Bereich des Lichtbogenofens anzuordnen, so dass durch die dabei entstehende intensive Sauerstoffströmung die aus dem Schrott stammenden unverbrannten Komponenten verbrannt wurden. Die Sauerstoffaufblasvorrichtungen werden so eingestellt, dass die Strömungsgeschwindigkeiten des Sauerstoffs mindestens Schallgeschwindigkeit beträgt. Zur Erzeugung von Strömungsgeschwindigkeiten größer Schallgeschwindigkeit sind Lavaldüsen einzusetzen, bei denen die Druckenergie in Geschwindigkeit umgesetzt wird. Als Nachteile ergeben sich hohe Herstellungskosten für die Aufblasvorrichtungen und ungenügende Strömungsverhältnisse bei Verspritzungen, da die Lavaldüsen nur in sauberem Zustand in einem engen Bereich optimal arbeiten. Des weiteren werden durch den hohen Schutzgasbedarf zum Freihalten der Lavaldüsen hohe Betriebskosten verursacht. Ferner werden durch die gewählte Ausführung der Düsen von mindestens Schallgeschwindigkeit hohe Sauerstoff―Impulsströme erzeugt, die zur Zerstörung der benachbarten wassergekühlten Ofenpanel führen.

In der EP 0 627 492 B1 ist eine Einblasdüse für Sauerstoff beschrieben, die eine Baugruppe aufweist, bestehend aus einem länglichen Körper mit einer Hauptrichtung, welche den Gaseingangsdurchtritt festlegt, der mit einem Kanal zur Versorgung mit Sauerstoff verbindbar ist und einem Kopf, welcher den Gasausgangsdurchtritt festlegt. Die Einblasdüsen enden mit einem bestimmten Winkel in der Ofenwand des Lichtbogenofens. Diese Form der Einblasdüse hat den Nachteil, dass große Schutzgasmengen in Form von Sauerstoff oder Luft benötigt werden, um ein Verstopfen des Gasausgangsdurchtrittes zu vermeiden. Wird Sauerstoff als Schutzgas verwendet, entstehen hohe Betriebskosten. Beim Einsatz von Luft als Schutzgas zum Freihalten des Gasausgangsdurchtrittes kommt es neben zusätzlichen Kosten für die Regel- und Sicherheitstechnik aufgrund der hohen Durchsätze an Luft zu wärmetechnischen Verlusten im Lichtbogenofen, die einen höheren Energieverbrauch zur Folge haben.

In der US 5 572 544 wird ein Lichtbogenofen-Nachverbrennungsverfahren offenbart, bei dem Sauerstoff zur Nachverbrennung von unvollkommen verbrannten Komponenten über eine Lanze, die durch die Ofentür geführt wird, eingedüst wird. Nachteilig bei der Positionierung der Sauerstoff-Lanze durch die Ofentür ist es, dass sehr große Falschluftmengen, die beim Schmelzprozeß durch die Ofentür in den Lichtbogenofen einströmen, an der Nachverbrennung teilnehmen. Bedingt durch den hohen Stickstoffballast der Falschluft stellen sich niedrige Flammentemperaturen der Nachverbrennung ein, weil der inerte Stickstoff aufgewärmt werden muß. In der Folge vermindern sich sowohl der Nachverbrennungswirkungsgrad als auch der Wärmeübergang durch Strahlung, so dass die Einsparung en elektrischer Energie in kWh/t je eingesetzten m³ Sauerstoff reduziert wird.

Die bisher bekannten Vorrichtungen und Verfahren zur Nachverbrennung im Lichtbogenofen erfüllen die gestellten Forderungen in Bezug auf niedrige Betriebskosten für die Schutzgasmengen zum Freihalten der Lanzen und hohen Nachverbrennungsgraden bei gleichzeitig hoher Wärmeübertragung durch Strahlung während einer längeren Ofenreise nur unzureichend.

Der Erfindung liegt die Aufgabe zugrunde, die Nachteile des genannten Standes der Technik zu überwinden und eine Vorrichtung und ein Verfahren zur Eindüsung von Brennstoff und/oder Sauerstoff in einen metallurgischen Schmelzofen, insbesondere Lichtbogenofen, zu schaffen, die es ermöglichen, die Schutzgasmenge und damit die Betriebskosten für das Schutzgas zum Freihalten der Vorrichtung zu senken, die Schmelzleistung des Ofens zu steigern und bei verstärktem Einsatz von kostengünstigen Schrotten und Brennstoffen durch hohe Nachverbrennungswirkungsgrade bei gleichzeitig hoher Wärmeübertragung durch Strahlung zur Einsparung von insbesondere Elektroenergie beizutragen.

Erfindungsgemäß wird diese Aufgabe durch eine Vorrichtung zur wahlweisen Eindüsung von Brennstoff und Sauerstoff oder Sauerstoff allein in einen metallurgischen Schmelzofen, insbesondere Lichtbogenofen gelöst, welche Vorrichtung eine Zuführungsleitung für Brennstoff, einen Zuführungskanal für Brennstoff und mindestens eine schräg angeordnete Bohrung für Brennstoff, eine Zuführungsleitung für Sauerstoff, eine Druckkammer, in der sich ein Stempel befindet, mindestens eine Durchtrittsbohrung, einen Umlenkraum für Sauerstoff, einen Zuführungskanal für Sauerstoff, eine Kammer mit mindestens einer schräg angeordneten Öffnung, eine Austrittsdüse, eine axiale Kolbenstange mit einem Verschlußteil, ein Abstützelement, z.B. eine Buchse, eine Ausgleichskammer, die ein elastisches Mittel enthält, eine Entlastungsöffnung, die mit einem Zylinder in Verbindung steht, eine Zuführungsleitung für Kühlwasser, einen wassergekühlten Trakt und eine Abführungsleitung für Kühlwasser aufweist, wobei der über die Zuführungsleitung einströmende Sauerstoff die Austrittsdüse eigenmediumgesteuert durch Druck auf den Stempel, Bewegung der axialen Kolbenstange und des Verschlußteils in Richtung der Entlastungsöffnung und damit Freigabe der Bohrung und der schräg angeordneten Öffnung öffnet.

Die Erzielung einer größtmöglichen Einsparung an Schutzgas zum Freihalten der Austrittsdüse der Vorrichtung wird erfindungsgemäß dadurch erreicht, dass nur in den Schmelzphasen, wenn Sauerstoff benötigt wird, die Austrittsdüse durch den einströmenden Sauerstoff eigenmediumgesteuert geöffnet wird. Damit ist es vorteilhaft möglich, im Erdgas/Sauerstoff-Betrieb außerhalb der Austrittsdüse eine Flamme auszubilden, die einen auf die Verbrennungsleistung bezogenen Impulsstrom von 4 bis 20 N/MW, vorzugsweise 6 bis 15 N/MW, erzeugt. Durch die Erfindung sind ferner günstige Voraussetzungen geschaffen worden, dass der Außendurchmesser der Vorrichtung klein dimensioniert werden kann.

Durch eine erfindungsgemäße Anordnung und Dimensionierung der Austrittsdüse mit einem Querschnittsverhältnis der Brennstoffbohrung zu der Sauerstofföffnung im Bereich von 0,45 bis 0,7 und insbesondere bei einem Wert von ca. 0,59 wird vorteilhaft erreicht, dass das Verbrennungsverhältnis in Abhängigkeit von Sauerstoffgehalt im Ofen zwischen 0,9 bis 2,0 eingestellt werden kann, so dass im gesamten Regelbereich eine stabile Flamme entsteht.

Es ist vorgesehen, dass die Austrittsdüse aus Kupfer besteht.

Erfindungsgemäß wird für das Verschlußteil vorzugsweise ein hochtemperaturfester Werkstoff wie hochtemperaturfester Stahl, vorzugsweise eine Nickel-Basislegierung, wie Inconel, verwendet.

Nach der Erfindung erweist es sich bei einem metallurgischen Schmelzofen, insbesondere Lichtbogenofen mit mindestens einer Elektrode, als vorteilhaft, mindestens eine Vorrichtung zur Eindüsung von Brennstoff und/oder Sauerstoff, insbesondere nach Anspruch 1, im Bereich des Heißgaskrümmers in der Wand des Schmelzofens mit einem Neigungswinkel von ca. 30° zur Waagerechten nach unten und tangential in den Raum zwischen der Elektrode und der Wand des Schmelzofens anzuordnen.

Besonders vorteilhaft ist es erfindungsgemäß, bei einem metallurgischen Schmelzofen zwei Vorrichtungen zur Eindüsung von Brennstoff und/oder Sauerstoff unterhalb des Heißgaskrümmers so anzuordnen, dass mit überlagerter Sauerstoff-Strömungsabdeckung der Hauptabgasstrom durchmischt wird.

Die Aufgabe wird ferner durch ein Verfahren zur Nachverbrennung von Produkten aus unvollkommener Verbrennung in einem metallurgischen Schmelzofen, insbesondere Lichtbogenofen mit mindestens einer Elektrode, mit mindestens einem Brennstoff/Sauerstoff-Brenner, gelöst, welches dadurch gekennzeichnet ist, dass im Brennerbetrieb ein Brennstoff/Sauerstoff-Impulsstrom kleiner 45 N und/oder im reinen Sauerstoffbetrieb ein Sauerstoff-Impulsstrom kleiner 90 N eingestellt wird. Durch den maximalen Brennstoff/Sauerstoff-lmpulsstrom von 45 N wird eine Gefährdung der benachbarten wassergekühlten Ofenpanel ausgeschlossen. Das erfindungsgemäße Verfahren verringert den Verbrauch an elektrischer Energie und erhöht gleichzeitig die Schmelzleistung des Lichtbogenofens, wobei die im Ofen aus unvollkommener Verbrennung entstandenen Komponenten nahezu vollständig verbrannt werden.

Insbesondere durch eine entsprechende Dimensionierung der Austrittsdüse wird eine auf den Querschnitt bezogene Impulsstromdichte von 0,8 bis 8,0 N/cm², vorzugsweise 1,1 bis 6,0 N/cm², erzielt. Vorteilhaft wird so im reinen Sauerstoff-Betrieb ein maximaler Sauerstoff-Impulsstrom von 90 N erzeugt und damit eine Gefährdung der benachbarten wassergekühlten Ofenpanel vermieden.

Gemäß der Erfindung erweist es sich als vorteilhaft, dass die Strömungsverhältnisse der Brennstoff-/Sauerstoff-Flamme und des in den Schmelzofen eingedüsten Sauerstoffstrahls durch das Verfahrens und die Vorrichtung sich nicht verändern und somit entscheidend eine wirtschaftliche Nachverbrennung ermöglichen. Besonders vorteilhaft ist es, dass nach einer Ausführung der Erfindung die Richtung des Brennstoff/Sauerstoff-Impulsstroms und/oder Sauerstoff-Impulsstroms entgegengesetzt zur Richtung des Bewegungsimpulses der Hauptabgasströmung eingestellt wird. Erfindungsgemäß werden Brennstoff, vorzugsweise Erdgas, und/oder Sauerstoff im Bereich des Heißgaskrümmers durch die Ofenwand mit einem Neigungswinkel von 30° zur Waagerechten nach unten und tangential in den Raum zwischen Elektroden und Ofenwand eingeleitet. Dies dient vorteilhaft dazu, dass der Brennstoff/ Sauerstoff-Impulsstrom mit maximal 45 N und der Sauerstoff-Impulsstrom mit maximal 90 N entgegengesetzt zum Bewegungsimpuls der Haupt-Abgasströmung wirkt. Dadurch wird eine gute Durchmischung der Abgase mit dem freien Sauerstoff erzielt wird, was zu einer nahezu vollständigen Nachverbrennung führt.

Durch die Erfindung wird ferner vorteilhaft erreicht, dass in Phasen des Schmelzprozesses, in denen kein Sauerstoff benötigt wird, die Austrittsdüse nahezu verschlossen bleibt und nur geringe Schutzgasmengen zum Freihalten der Austrittsdüse der Vorrichtung zur Eindüsung von kleiner oder gleich 20 m³/h erforderlich werden.

Gemäß der Erfindung wird im Brennstoff/Sauerstoff-Betrieb ein Verbrennungsverhältnis von 0,9 bis 2,0 eingestellt, so dass in einem Lichtbogenofen ein beschleunigtes Schrotteinschmelzen und Freibrennen einer Schneise in das Schrotthaufwerk in Abhängigkeit vom Sauerstoffgehalt gewährleistet werden kann.

Freier Sauerstoff kann so in das Schrotthaufwerk geblasen und die erzeugte Energie aus der Nachverbrennung an den Schrott übertragen werden. Erfindungsgemäß beginnen vorzugsweise das Einschmelzen des Einsatzes in einem Lichtbogenofen mittels der Elektrode und das Schneiden einer Schneise mit Hilfe der erfindungsgemäßen Vorrichtung gleichzeitig.

Erfindungsgemäß wird die Vorrichtung vorzugsweise nach dem Freibrennen der Schneise als reine Sauerstoff-Lanze betrieben. Dies ermöglicht eine wirtschaftliche Nachverbrennung mit niedrigen spezifischen Sauerstoffverbräuchen bei gleichzeitiger Schonung der benachbarten wassergekühlten Ofenpanel.

Es liegt im Sinne der Erfindung, das Verbrennungsverhältnis zwischen Brennstoff, vorzugsweise Erdgas, und Sauerstoff sowie die Sauerstoff-Durchsatzmengen in Abhängigkeit von der Abgasanalyse zu regeln.

Es ist vorgesehen, Erdgas als Brennstoff für die Vorrichtung und/oder das Verfahren nach der Erfindung zu verwenden.

Vorteilhaft wird das erfindungsgemäße Verfahren und/oder Vorrichtung für einen Einschmelzprozeß von Roheisen, Metalllegierungen und/oder Metallschmelzen eingesetzt.

Ferner wird die Vorrichtung und/oder das Verfahren im Sinne der Erfindung für die Nachverbrennung von Produkten aus einer unvollkommenen Verbrennung, insbesondere Kohlenmonoxid, in metallurgischen Schmelzöfen verwendet.

Der Einsatz ist jedoch nicht auf metallurgische Schmelzöfen beschränkt. Vielmehr kann die erfindungsgemäße Vorrichtung für die Nachverbrennung von Produkten aus einer unvollkommenen Verbrennung, insbesondere Kohlenmonoxid, in anderen Hochtemperaturprozessen, z.B. bei einer Müllverbrennung, insbesondere Sondermüllverbrennung, verwendet werden.

Die Erfindung soll nachstehend an einem Ausführungsbeispiel und einer Zeichnung (Fig.) beispielhaft näher erläutert werden.

Die Fig. zeigt einen Schnitt durch eine Vorrichtung zum Eindüsen von Erdgas und/oder Sauerstoff in geöffneter Stellung.

Die erfindungsgemäße Vorrichtung zur Eindüsung von Erdgas und/oder Sauerstoff besteht aus einer Zuführungsleitung für Erdgas 1, einem Zuführungskanal für Erdgas 2, und mindestens einer schräg angeordneten Bohrung für Erdgas 3, einer Zuführungsleitung für Sauerstoff 4, einer Druckkammer 5, in der sich ein Stempel 6 befindet, mindestens einer Durchtrittsbohrung 7, einem Umlenkraum für Sauerstoff 8, einem Zuführungskanal für Sauerstoff 9, einer Kammer 10, mit mindestens einer schräg angeordneten Öffnung für Sauerstoff 11, einer Austrittsdüse 12, einer axialen Kolbenstange 13 mit einem Verschlußteil 14, einer Buchse 15 zur Lagerung und Führung der axialen Kolbenstange 13, einer Ausgleichskammer 16, die eine Feder 17 enthält, eine Entlastungsöffnung 18, die mit einem Kurzhubzylinder 19 in Verbindung steht, einer Zuführungsleitung für Kühlwasser 20, einem wassergekühlten Trakt 21 und einer Abführungsleitung für Kühlwasser 22.

Der über die Zuführungsleitung 4 zugeführte Sauerstoff gelangt in die Druckkammer 5, dabei wird der Stempel 6 in die Ausgleichskammer 16 gedrückt, so dass die Durchtrittsbohrung 7 frei wird. Gleichzeitig bewegt sich das Verschlußteil 14, das über der axialen Kolbenstange 13 mit dem Stempel 6 verbunden ist, in Richtung Kurzhubzylinder 19. Dadurch werden in der Kammer 10 die Öffnung 11 für Sauerstoff und die Bohrung 3 für das Erdgas freigegeben (geöffnete Stellung).

Der Sauerstoff strömt durch die Druckkammer 5, anschließend durch die Durchtrittsbohrung 7 in den Umlenkraum 8 und weiter durch den Zuführungskanal 9 über die Öffnung 11 in die Kammer 10 und weiter über die Austrittsdüse 12 in den Ofen.

Das über die Zuführungsleitung 1 zugeführte Erdgas gelangt über den Zuführungskanal 2 in die Bohrung 3 und bildet mit dem Sauerstoff außerhalb der Austrittsdüse 12 eine Flamme, die einen auf die Verbrennungsleistung bezogenen Impulsstrom von 4 bis 20 N/MW erzeugt.

Das Querschnittsverhältnis der Öffnung 11 zu der Bohrung 3 liegt in einem Bereich von 0,45 bis 0,7. Damit werden stabile Flammen bei Verbrennungsverhältnissen zwischen 0,9 bis 2,0 erreicht. Im Brennbetrieb wird ein maximaler Erdgas/Sauerstoff-Impulsstrom von 45 N erzeugt, so dass eine Gefährdung der benachbarten wassergekühlten Ofenpanel ausgeschlossen wird.

Im Sauerstoff-Betrieb der Vorrichtung wird eine auf den Querschnitt der Austrittsdüse 12 bezogene Impulsstromdichte von 0,8 bis 8,0 N/cm³ erzeugt, wobei der max. Sauerstoff-Impulsstrom von 90 N nicht überschritten wird.

Die erfindungsgemäße Vorrichtung zur Eindüsung von Erdgas und/oder Sauerstoff kann bei höchsten Ofentemperaturen eingesetzt werden, da die Austrittsdüse 12 mit einem wassergekühlten Trakt 21 umgeben ist, wobei das Kühlwasser über die Zuführungsleitung 20 zuströmt und über die Abführungsleitung 22 abströmt.

Die zuvor beschriebene Vorrichtung wurde in einem Lichtbogenofen, beispielsweise bei einem Verfahren zur Nachverbrennung von Produkten aus unvollkommener Verbrennung, eingesetzt.

Zwei Vorrichtungen wurden im Bereich des Heißgaskrümmers in der Ofenwand mit einem Neigungswinkel von 30° zur Waagerechten nach unten und tangential in den Raum zwischen der Elektrode und der Ofenwand angeordnet, so dass die Hauptabgasströmung mit überlagerter Sauerstoff-Strömungsabdeckung erfaßt wird. Die Vorrichtungen werden in der Anfangsphase des Einschmelzens als Brennstoff/Sauerstoff-Brenner betrieben. Die Verbrennungsleistung je Vorrichtung wird entsprechend der Schrottverhältnisse zwischen 1,0 bis 2,5 MW vorgegeben. Das Verbrennungsverhältnis wird in Abhängigkeit vom Sauerstoffgehalt im Ofen zwischen 0,9 bis 2,0 eingestellt. Nach Einsturz der Schrottsäule wird die Erdgaszufuhr abgestellt und Sauerstoff-Einblasraten in Anpassung an den Sauerstoffgehalt im Abgas zwischen 13 bis 30 m³/min. eingestellt. Dies entspricht spezifischen Sauerstoffverbräuchen von 4 bis 8 m³/tfl.

Für einen bestimmten, relativ kurzen Zeitraum, typisch wenige Sekunden, wird die gesamte Gaszufuhr (Erdgas- und Sauerstoffzufuhr) unterbrochen, so dass das Verschlußteil 14 sich in Richtung Austrittsdüse 12 bewegt und in der Kammer 10 eventuell anhaftende Verunreinigungen aus der Kammer 10 herausdrückt.

In Schmelzphasen, in denen sich keine unverbrannten Komponenten im Abgas befinden, werden nur sehr geringe Mengen Sauerstoff über die Vorrichtung geleitet, so dass die Austrittsdüsen 11 der Vorrichtungen mittels des Verschlußteiles 14 nahezu vollständig verschlossen werden. In diesen Phasen werden die Vorrichtungen zum Freihalten der Austrittsdüse 12 mit kleiner oder gleich 20 m³ Sauerstoff pro Stunde und Vorrichtung beaufschlagt.

Beim erfindungsgemäßen Verfahren zur Nachverbrennung von Produkten aus unvollkommener Verbrennung werden Nachverbrennungswirkungsgrade von größer oder gleich 85 % erzielt, wobei ein Einsparpotential an elektrischer Energie pro m³ Sauerstoff von größer oder gleich 2,5 kWh erreicht wird.

Mit der erfindungsgemäßen Vorrichtung und dem entsprechenden Verfahren werden gegenüber den Vorrichtungen und Verfahren nach dem Stand der Technik die Vorteile einer zusätzlichen Einsparung an elektrischer Energie durch höhere Nachverbrennungswirkungsgrade und einer Einsparung von Schutzgasmengen und damit Senkung der Betriebskosten erzielt.

Die Anlagensicherheit wird erhöht, da Verpuffungen und Explosionen im Abgastrakt vermieden werden und es ergibt sich der Vorteil konstanterer Leistungsdaten des Lichtbogenofens, da die Austrittsdüse 12 nicht verunreinigt wird und somit konstante Strömungsverhältnisse erreicht werden.

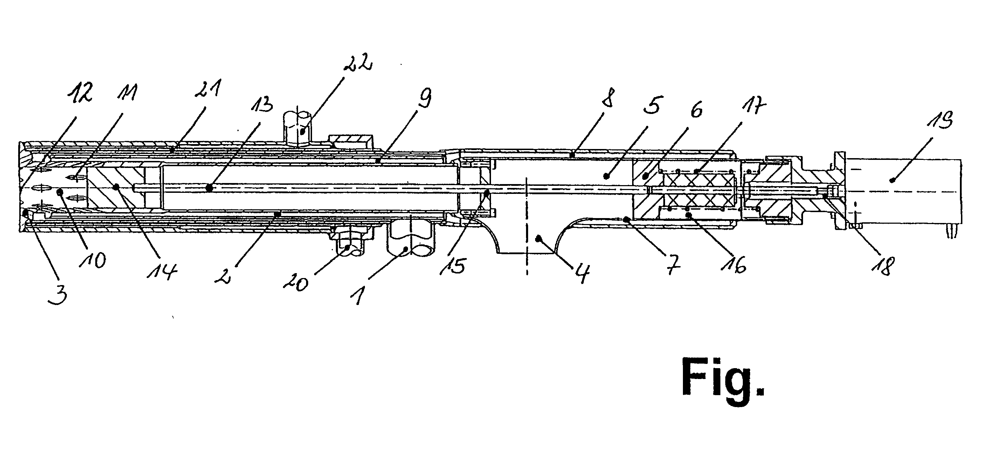

## Patentansprüche

1. Vorrichtung zur wahlweisen Eindüsung von Brennstoff und Sauerstoff oder Sauerstoff alleine in einen metallurgischen Schmelzofen, insbesondere Lichtbogenofen, welche Vorrichtung eine Zuführungsleitung für Brennstoff (1), einen Zuführungskanal für Brennstoff (2) und mindestens eine schräg angeordnete Bohrung für Brennstoff (3), eine Zuführungsleitung für Sauerstoff (4), eine Druckkammer (5), in der sich ein Stempel (6) befindet, mindestens eine Durchtrittsbohrung (7), einen Umlenkraum für Sauerstoff (8), einen Zuführungskanal für Sauerstoff (9), eine Kammer (10) mit mindestens einer schräg angeordneten Öffnung (11), eine Austrittsdüse (12), eine axiale Kolbenstange (13) mit einem Verschlußteil (14), ein Abstützelement (15), eine Ausgleichskammer (16), die ein elastisches Mittel (17) enthält, eine Entlastungsöffnung (18), die mit einem Zylinder (19) in Verbindung steht, eine Zuführungsleitung für Kühlwasser (20), einen wassergekühlten Trakt (21) und eine Abführungsleitung für Kühlwasser (22) aufweist, wobei der über die Zuführungsleitung (4) einströmende Sauerstoff die Austrittsdüse (12) eigenmediumgesteuert durch Druck auf den Stempel (6), Bewegung der axialen Kolbenstange (13) und des Verschlußteils (14) in Richtung der Entlastungsöffnung (18) und damit Freigabe der Bohrung (3) und der schräg angeordneten Öffnung (11) öffnet.

2. Vorrichtung nach Anspruch 1,
**dadurch gekennzeichnet,**
**daß** das Querschnittsverhältnis der Öffnung (11) zu der Bohrung (3) 0,45 bis 0,7, vorzugsweise ca. 0,59, beträgt.

3. Vorrichtung nach Anspruch 1 oder 2,
**dadurch gekennzeichnet,**
**daß** die Austrittsdüse (12) aus Kupfer besteht.

4. Vorrichtung nach einem der Ansprüche 1 bis 3,
**dadurch gekennzeichnet**
**daß** das Verschlußteil (14) aus einem hochtemperaturfesten Werkstoff, vorzugsweise eine Nickel-Basislegierung, wie Inconel, besteht.

5. Metallurgischer Schmelzofen, insbesondere Lichtbogenofen mit mindestens einer Elektrode, bei welchem metallurgischen Schmelzofen mindestens eine Vorrichtung zur Eindüsung von Brennstoff und/oder Sauerstoff, insbesondere nach Anspruch 1, im Bereich des Heißgaskrümmers in der Wand des Schmelzofens mit einem Neigungswinkel von ca. 30° zur Waagerechten nach unten und tangential in den Raum zwischen der Elektrode und der Wand des Schmelzofens angeordnet ist

6. Verfahren zum Schmelzen von Einsatzstoffen sowie zur Nachverbrennung von Produkten aus unvollkommener Verbrennung in einem metallurgischen Schmelzofen, insbesondere Lichtbogenofen mit mindestens einer Elektrode, mit mindestens einer Vorrichtung nach einem der Ansprüche 1 bis 5,
**dadurch gekennzeichnet,**
**daß** im Brennerbetrieb ein Brennstoff/Sauerstoff-Impulsstrom kleiner 45 N und/oder im reinen Sauerstoffbetrieb ein Sauerstoff-Impulsstrom kleiner 90 N eingestellt wird.

7. Verfahren nach Anspruch 6,
**dadurch gekennzeichnet,**
**daß** die Richtung des Brennstoff/Sauerstoff-lmpulsstroms und/oder Sauerstoff-Impulsstroms entgegengesetzt zur Richtung des Bewegungsimpulses der Hauptabgasströmung ist

8. Verfahren nach Anspruch 6 oder 7,
**dadurch gekennzeichnet,**
**daß** im Brennstoff/Sauerstoff-Betrieb außerhalb der Austrittsdüse (12) eine Flamme so ausgebildet wird, daß ein auf die Verbrennungsleistung bezogener Impulsstrom von 4 bis 20 N/MW, vorzugsweise von 6 bis 15 N/MW, eingestellt wird.

9. Verfahren nach einem der Ansprüche 6 bis 8,
**dadurch gekennzeichnet,**
**daß** im reinen Sauerstoff-Betrieb eine auf den Querschnitt der Austrittsdüse (12) bezogene Impulsstromdichte von 0,8 bis 8,0 N/cm², vorzugsweise von 1,1 bis 6,0 N/ cm², eingestellt wird.

10. Verfahren nach einem der Ansprüche 6 bis 9,
**dadurch gekennzeichnet,**
**daß** im Brennerbetrieb ein Verbrennungsverhältnis von Brennstoff zu Sauerstoff in Abhängigkeit vom Sauerstoffgehalt im Abgas zwischen 0,9 bis 2,0 eingestellt wird.

11. Verfahren nach einem der Ansprüche 6 bis 10,
**dadurch gekennzeichnet,**
**daß** das Einschmelzen des Einsatzes in einem Lichtbogenofen mittels der Elektrode und das Schneiden einer Schneise mit Hilfe einer Vorrichtung nach Anspruch 1 gleichzeitig beginnen.

12. Verfahren nach einem der Ansprüche 6 bis 11,
**dadurch gekennzeichnet,**
**daß** die Durchflußmengen für Sauerstoff gemäß einer Abgasanalyse eingestellt werden.

13. Verwendung von Erdgas als Brennstoff für eine Vorrichtung nach Anspruch 1 und/oder ein Verfahren nach Anspruch 6.

14. Verwendung einer Vorrichtung nach Anspruch 1 und/oder eines Verfahrens nach Anspruch 6 für einen Einschmelzprozeß von Roheisen, Metalllegierungen und/oder Metallschmelzen.

15. Verwendung einer Vorrichtung nach Anspruch 1 und/oder eines Verfahrens nach Anspruch 6 für die Nachverbrennung von Produkten aus einer unvollkommenen Verbrennung, insbesondere Kohlenmonoxid, in metallurgischen Schmelzöfen.

## Claims

1. Device for the optional injection of fuel and oxygen or just oxygen into a metallurgical melting furnace, in particular an arc furnace, which device has a feed line for fuel (1), a feed passage for fuel (2) and at least one inclined bore for fuel (3), a feed line for oxygen (4), a pressure chamber (5), in which there is a ram (6), at least one through-bore (7), a diverting space for oxygen (8), a feed passage for oxygen (9), a chamber (10) having at least one inclined opening (11), an outlet nozzle (12), an axial piston rod (13) with a closure part (14), a supporting element (15), a compensation chamber (16) which includes an elastic means (17), a relief opening (18) which is connected to a cylinder (19), a feed line for cooling water (20), a water-cooled section (21) and a discharge line for cooling water (22), the oxygen which flows in via the feed line (4) opening the outlet nozzle (12) under control of the medium itself by pressing on the ram (6), moving the axial piston rod (13) and the closure part (14) in the direction of the relief opening (18) and thereby opening up the bore (3) and the inclined opening (11).

2. Device according to Claim 1, **characterized in that** the cross-sectional ratio of the opening (11) to the bore (3) is 0.45 to 0.7, preferably approx. 0.59.

3. Device according to Claim 1 or 2, **characterized in that** the outlet nozzle (12) consists of copper.

4. Device according to one of Claims 1 to 3, **characterized in that** the closure part (14) consists of a material which is able to withstand high temperatures, preferably a nickel-based alloy, such as Inconel.

5. Metallurgical melting furnace, in particular arc furnace having at least one electrode, in which metallurgical melting furnace at least one device for the injection of fuel and/or oxygen, in particular according to Claim 1, is arranged in the region of the hot-gas manifold in the wall of the melting furnace, with an angle of inclination of approx. 30° with respect to the horizontal, facing downwards and tangentially into the space between the electrode and the wall of the melting furnace.

6. Process for melting charge materials and for afterburning products from incomplete combustion in a metallurgical melting furnace, in particular an arc furnace with at least one electrode, using at least one device according to one of Claims 1 to 5, **characterized in that** when the burner is operating a pulsed fuel/oxygen flow of less than 45 N is established and/or in pure oxygen mode a pulsed oxygen flow of less than 90 N is established.

7. Process according to Claim 6, **characterized in that** the direction of the pulsed fuel/oxygen flow and/or pulsed oxygen flow is opposite to the direction of the momentum of the main off-gas flow.

8. Process according to Claim 6 or 7, **characterized in that** in fuel/oxygen mode outside the outlet nozzle (12) a flame is formed in such a way that a pulsed flow of 4 to 20 N/MW, preferably of 6 to 15 N/MW, is established with respect to the combustion capacity.

9. Process according to one of Claims 6 to 8, **characterized in that** in pure oxygen mode a pulsed flow density of 0.8 to 8.0 N/cm², preferably of 1.1 to 6.0 N/cm², is established with respect to the cross section of the outlet nozzle (12).

10. Process according to one of Claims 6 to 9, **characterized in that** when the burner is operating a fuel to oxygen combustion ratio of between 0.9 and 2.0 is established according to the oxygen content in the off-gas.

11. Process according to one of Claims 6 to 10, **characterized in that** the melting of the charge in an arc furnace by means of the electrode and the cutting of a track with the aid of a device according to Claim 1 commence simultaneously.

12. Process according to one of Claims 6 to 11, **characterized in that** the through-flow quantities for oxygen are set according to an off-gas analysis.

13. Use of natural gas as fuel for a device according to Claim 1 and/or a process according to Claim 6.

14. Use of a device according to Claim 1 and/or of a process according to Claim 6 for a process for melting pig iron, metal alloys and/or metal melts.

15. Use of a device according to Claim 1 and/or of a process according to Claim 6 for the afterburning of products from incomplete combustion, in particular carbon monoxide, in metallurgical melting furnaces.

## Revendications

1. Dispositif pour injecter sélectivement du combustible et de l'oxygène ou de l'oxygène seul dans un four de fusion métallurgique notamment un four à arc, ce dispositif comportant une conduite d'alimentation en combustible (1), un canal d'alimentation de combustible (2) et au moins un perçage en biais (3) pour le combustible, une conduite d'alimentation en oxygène (4), une chambre de pression (5) munie d'un bouchon (6), au moins un orifice de passage (7), une chambre de déviation (8) pour l'oxygène, un canal d'alimentation (9) pour l'oxygène, une chambre (10) avec au moins une ouverture (11) en biais, une buse de sortie (12), une tige axiale (13) de piston avec un organe d'obturation (14), un élément de support (15), une chambre de compensation (16) munie d'un moyen élastique (17), un orifice de décharge (18) relié à un cylindre (19), une conduite d'alimentation en eau de refroidissement (20), un chemin (21) refroidi par l'eau et une conduite d'évacuation (22) pour l'eau de refroidissement,
l'oxygène arrivant par la conduite d'alimentation (4) ouvrant la buse de sortie (12) par la commande propre par le fluide, par pression sur le bouchon (6), déplacement de la tige axiale de piston (13) et de l'organe d'obturation (14) en direction de l'orifice de décharge (18) et ainsi libération du perçage (3) et de l'ouverture inclinée (11).

2. Dispositif selon la revendication 1,
**caractérisé en ce que**
le rapport de section entre l'ouverture (11) et le perçage (3) est compris entre 0,45 et 0,7, et de préférence il est de l'ordre de 0,59.

3. Dispositif selon l'une quelconque des revendications 1 ou 2,
**caractérisé en ce que**
la buse de sortie (12) est en cuivre.

4. Dispositif selon l'une quelconque des revendications 1 à 3,
**caractérisé en ce que**
la pièce d'obturation (14) est en une matière très réfractaire de préférence un alliage à base de nickel tel que Inconel.

5. Four de fusion métallurgique notamment four à arc comportant au moins une électrode, ce four étant muni d'au moins un dispositif pour injecter du combustible et/ou de l'oxygène notamment selon la revendication 1 au niveau du coude des gaz chauds dans la paroi du four de fusion avec un angle d'inclinaison d'environ 30° par rapport à l'horizontale, vers le bas et du bouchon tengentiellement dans la chambre entre l'électrode et la paroi du four.

6. Procédé de fusion d'additif ainsi que de post-combustion de produit résultant de la combustion incomplète dans un four de fusion métallurgique, notamment un four à arc, comportant au moins une électrode avec au moins un dispositif selon l'une quelconque des revendications 1 à 5,
**caractérisé en ce qu'**
en mode de fonctionnement du brûleur, on règle un flux impulsionnel combustible/oxygène inférieur à 45 N et/ou en mode avec de l'oxygène pur on règle un flux impulsionnel d'oxygène inférieur à 90 N.

7. Procédé selon la revendication 6,
**caractérisé en ce que**
la direction du flux impulsionnel combustible/oxygène et/ou du flux impulsionnel d'oxygène est opposée en direction aux impulsions de mouvement du flux principal des gaz d'échappement.

8. Procédé selon l'une quelconque des revendications 6 ou 7,
**caractérisé en ce qu'**
en mode de fonctionnement combustible/oxygène, à l'extérieur de la base de sortie (12) il se forme une flamme et on règle un flux impulsionnel rapporté à la puissance de combustion 09-02 de 4-20 N/MW, et de préférence de 6-15 N/MW.

9. Procédé selon l'une quelconque des revendications 6 à 8,
**caractérisé en ce qu'**
en mode de fonctionnement avec de l'oxygène pur, on règle une densité de flux impulsionnel de 0,8 à 8,0 N/cm² et de préférence de 1,1 à 6,0 N/cm² rapporté à la section de la. buse de sortie (12).

10. Procédé selon l'une quelconque des revendications 6 à 9,
**caractérisé en ce qu'**
en mode de combustion on règle un rapport de combustion entre le combustible et l'oxygène en fonction de la teneur en oxygène dans les gaz de combustion entre 0,9 et 2,0.

11. Procédé selon l'une quelconque des revendications 6 à 10,
**caractérisé en ce qu'**
on commence simultanément la fusion de l'additif dans le four à arc à l'aide de l'électrode et la découpe de la tranchée à l'aide du dispositif selon la revendication 1 en même tempes.

12. Procédé selon l'une quelconque des revendications 6 à 11,
**caractérisé en ce qu'**
on règle le débit d'oxygène selon une analyse des gaz de combustion.

13. Application de gaz naturel comme combustible dans un dispositif selon la revendication 1 et/ou un procédé selon la revendication 6,

14. Application d'un dispositif selon la revendication 1 et/ou d'un procédé selon la revendication 6 à un procédé de fusion de fer brut, d'alliage métallurgique et/ou de bain métallurgique.

15. Application d'un dispositif selon la revendication 1 et/ou d'un procédé selon la revendication 6 pour la post-combustion de produit résultant d'une combustion incomplète notamment de monoxyde de carbone dans des fours de fusion métallurgiques.
